# EUROPEAN PATENT APPLICATION

(11) **EP 1 134 011 A2**
(43) Date of publication of application: **19.09.2001**
(21) Application number: 00120990.7
(22) Date of filing: 27.09.2000
(51) Int. Cl.: A63H 23/08

(54) **An aquarium system with robotic underwater toys**

(30) Priority: 14.03.2000 JP 2000071325; 14.03.2000 JP 2000071326; 15.03.2000 JP 2000073063
(71) Applicant: Takara Co., Ltd., Tokyo 125 (JP); Xenoid Protodesign Co., Ltd., Inba-gun, Chiba (JP)
(72) Inventor: Choh, Jinsei, Xenoid Protodesign Co., Ltd., Inba-gun, Chiba (JP); Choh, Jintei, Xenoid Protodesign Co., Ltd., Inba-gun, Chiba (JP)
(74) Representative: Schmauder, Klaus Dieter

(57) **Abstract**

A display system such as an aquarium permits aquatic devices such as robotic simulated fish, crabs, shrimp, jellyfish and other underwater toys to move throughout the aquarium with apparent life like motion. A pump unit can cause the liquid in the aquarium to circulate to thereby provide a supplemental movement force not seen by a viewer. The aquatic toy apparatus can have a motor and a solar panel cell that are sealed with a housing. A propulsion member can be operatively connected to an outside of the toy apparatus to provide various forms of movement commensurate with the robotic toy. A magnetic transmission assembly can transmit an output of the motor through the waterproof housing to the propulsion member.

## Description

### BACKGROUND OF THE INVENTION

### 1. Field of the Invention

The present invention relates to underwater toys and a habitat system to enable the toys to move through the habitat system and more particularly an aquarium assembly that facilitates autonomous movement of self propelled underwater toys simulating aquatic creatures.

### 2. Description of Related Art

Aquariums that house fish and other aquatic creatures are found in resident and business environments. They require careful maintenance and feeding of the aquatic creatures including the removal of algae and toxic sewage.

Various underwater toys have been provided that are usually driven by batteries and electric motors. Such toys present problems in sealing the batteries and motors against water damage. Problems of providing propulsion in the water by mechanically moving propellers, paddles and wheels require careful sealing of shafts and motors in watertight containers and housings since the propellers for propulsion and the wheels must come in contact with the water. Therefore, if the output shaft operably coupled to the motor and the drive shaft of the propeller or of the wheels are continuously coaxial, the common shaft must be sealed to be waterproof at an intermediate portion thereof as it exists the housing. One of the methods for sealing an intermediate portion of the shaft waterproof consists of forming a separator wall in the way of the shaft, penetrating the shaft through a shaft hole formed in the separator wall, and sealing the gap between the shaft hole and the shaft, which, however, is technically difficult and expensive.

Recently, the cost of solar cells have enabled the provision of autonomous power sources to power relatively inexpensive and low power devices such as calculators, small fans, small cars and mobiles. However, solar cells, when enclosed in a transparent protective housing, can have the housing reflect off-axis light which decreases power.

### SUMMARY OF THE INVENTION

The present invention provides a decorative and entertaining robotic aquarium system that permits robotic aquatic creatures to appear to be completely self propelled as they ascend/descend and move about the aquarium. The aquarium includes a source of light energy and a gentle current flow of water. The robotic aquatic creatures can simulate various known creatures such as different types of fish, crabs, shrimp, jellyfish and the like. The robotic creatures can be powered by solar cells that are sealed in a waterproof envelope. Housings or bodies of the creatures can be sealed to protect the motors and circuitry from water damage while a magnetic transmission assembly can provide mechanical motion to exterior propellers, fins and the like.

The present invention further provides an underwater toy capable of making the motor, its output shaft and the drive shaft completely waterproof by relying upon a simply structure.

The underwater toy, according to the present invention, can include the following items:
(a) a motor and an output shaft operably coupled thereto, which are accommodated in a sealed container in a main toy body;
(b) a first magnet secured to an end of the output shaft and is disposed near a side wall of the container;
(c) a second magnet rotatably disposed on the outer side of the container at a position opposed to the first magnet with the side wall being sandwiched therebetween; and
(d) a propulsion member coupled to the second magnet.

The source of driving power for the motor may be a solar panel, a solar cell or a battery. The use of a solar panel is advantageous since the solar panel itself generates electricity and there is no need of replacement once it is set, which is convenient. The present invention provides an underwater solar panel which is capable of effectively utilizing even light that is incident in an inclined manner to the panel.

In order to solve the above problem, an underwater solar panel of the present invention is used as a power source for an underwater drive unit used in the water, and comprises:
(a) a light reflection prevention layer formed on the surface of the solar panel to prevent the reflection of light; and
(b) a protection layer for protecting the solar panel and the light reflection prevention layer from the water.

An object of the present invention is to provide a new environment for utilizing low energy efficiency solar cells which, at present, are not suited for general purpose toys that require large power and sophisticated motion, by making the solar cells waterproof so that they can be used in toys that float in the water, eliminating the renewal of cells and the power source wiring front an external unit, enhancing the efficiency for converting light energy into power while decreasing the physical burden such as gravity, and projecting a floating feeling based on the three-dimensional motion.

The present invention deals with an optical underwater toy having a power source unit that is made waterproof by vacuum-press-adhering the solar cells, and connecting it to a propulsion mechanism which uses, as a power unit, a motor that is also made waterproof, the optical underwater toy operates in the water upon receiving light from the sun or from an artificial illumination.

Further, a charging circuit for storing power that is made waterproof can be connected thereto so that the optical underwater toy operates for a short,. period of time even in an area where it is not irradiated with light.

Further, a receiver circuit capable of receiving signals from a remote operation is connected thereto, so that the optical underwater toy can be operated by a remote control device from outside the water tank. A maximum of three sets of remote control receiver circuits and propulsion mechanisms are employed in combination, so that the optical underwater toy is capable of moving in any three-dimensional direction as long as the electric power is being supplied.

In order that the optical underwater toy is supplied with electric power at all times, any dead zone of the source of light must be minimized as much as possible. Even when there exists a dead zone to some extent, a very weak circularly water flow as an environment in the water causes the optical underwater toy to move successively inside and outside the areas where it is irradiated with light, and the state of being supplied with electric power is necessarily maintained.

The main toy body may have the shape of a fish, and the propulsion member may be constituted as a propeller for propulsion in a horizontal direction. Alternatively, the main toy body may have the shape of a jellyfish, and the propulsion member may be a propeller for propulsion in a vertical direction. The main toy body may also have the shape of a shrimp, and the propulsion member may comprise a drive shaft arranged to traverse the toy body with a wire having resiliency attached to both ends thereof.

The main toy body could have the shape of a crab, and the propulsion member may be a rotary member that rotates in a lateral direction with respect to the main toy body.

The aquarium system for displaying these underwater toys can comprise a transparent container, a liquid filled in the container, an illumination means for illuminating the interior of the container, and an underwater toy having an operation mechanism that operates to apparently swim in the container when illuminated by the illumination means. There may also be provided a water stream-generating device for imparting a circulatory flow to the liquid in the container.

### BRIEF DESCRIPTION OF THE DRAWINGS

The exact nature of this invention will be readily apparent from consideration of the following detailed description in conjunction with the accompanying drawings, wherein:
Fig. 1 is a perspective view of a fish-type underwater toy according to the present invention;
Fig. 2 is a block diagram illustrating a principal transmission passage of power output;
Figs. 3(a) and 3(b) are views illustrating positional relationships between a first magnet and a second magnet;
Fig. 4 is a view illustrating a manner of operation of the caudal fin;
Fig. 5 is a perspective view of a jellyfish-type underwater toy;
Fig. 6 is a sectional view of a skirt portion under the head portion of Fig. 5;
Fig. 7 is a perspective view of a shrimp-type underwater toy;
Fig. 8 is a sectional view illustrating a motor, an output shaft thereof and a drive means;
Fig. 9 is a perspective view of a crab-type underwater toy;
Fig. 10 is a sectional view illustrating a motor, an output shaft thereof and a drive means;
Fig. 11 is a schematic view of a display system;
Fig. 12 is a view illustrating the mode of operation of a caudal fin;
Figs. 13(a) and 13(b) are views illustrating other examples for realizing the oscillation mode.
Fig. 14 is a sectional view of a solar panel used for the underwater toy;
Figs. 15(a) and 15(b) are views illustrating the modes of irradiation with light with and without a resin film;
Fig. 16 is a view illustrating the fabrication of the solar panel;
Fig. 17 is a perspective view of another fish-type underwater toy; and
Fig. 18 is a perspective view of still another fish-type underwater toy.

### DETAILED DESCRIPTION OF THE PREFERRED EMBODIMENTS

The following description is provided to enable any person skilled in the toy industry to make and use the invention and sets forth the best modes contemplated by the inventors of carrying out their invention. Various modifications, however, will remain readily apparent to those skilled in these arts, since the generic principles of the present invention have been defined herein specifically to provide an aquarium system with robotic underwater toys.

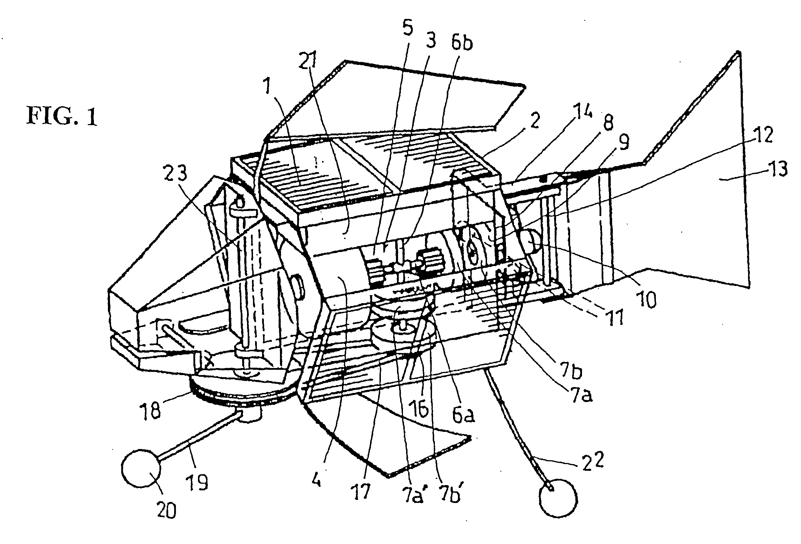

Fig. 1 shows an underwater toy which is modeled to simulate a fish as it swims in water, wherein reference numeral 1 denotes a solar panel or cell. The solar panel 1 is sealed in a protector covering or housing 2 of a transparent plastic material, and includes panels that are horizontally attached to a main toy body 3 with their light-receiving surfaces facing upward and panels that are attached to both side surfaces of the main toy body 3 with their light-receiving surfaces facing downward in an inclined manner so as to receive light from the upper side and light from the lower side reflected by mirrors (not shown) placed on the bottom of the water tank.

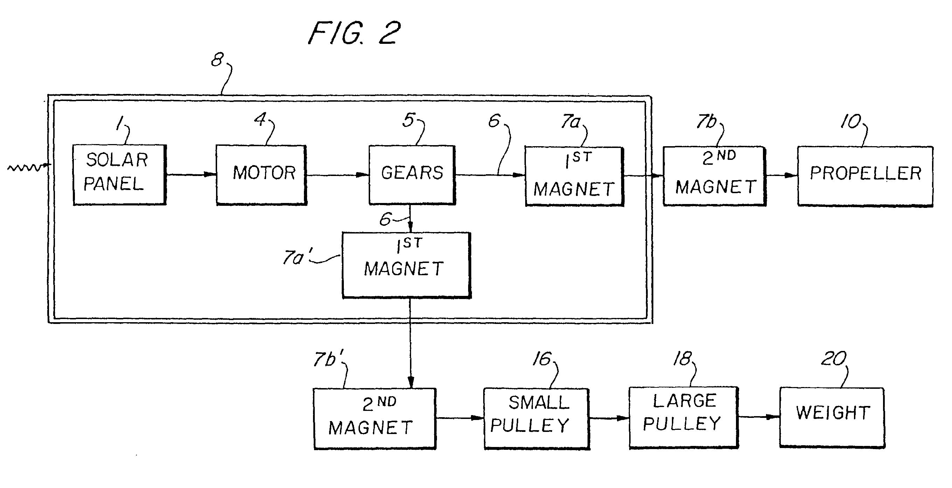

As shown in detail in Fig. 2, a motor 4 and a reduction gear train 5 are arranged at the center of the main toy body 3, and a first magnet 7a of a doughnut shaped type, having an N-pole and an S-pole on the same plane, is attached to an end of a horizontal output shaft 6a (and of a vertical output shaft 6b), being sealed and contained in a container 8 which as a whole is made waterproof.

Further, a second magnet 7b of the doughnut type is disposed facing the first magnet 7a via a separator wall 9 which forms a side wall of the container 8, and a propeller 10 secured thereto is supported on the outside of the side wall so as to freely rotate.

When any surface of the solar panel 1 receives light from the sun or from an illumination such as an aquarium lamp, the above constitution generates electric power from the light through conversion of the light energy to electricity by the solar cell 1 by which the motor 4 rotates thereby to rotate the horizontal output shaft 6a, vertical output shaft 6b and the first magnet 7a. When the first magnet 7a rotates, the magnetic field changes and the second magnet 7b rotates being synchronized therewith. Thus, the rotational force of the first magnet 7a in the container 8 is transmitted to the magnet outside the container 8, and the propeller 10 which is a drive member rotates and the underwater toy proceeds through the water.

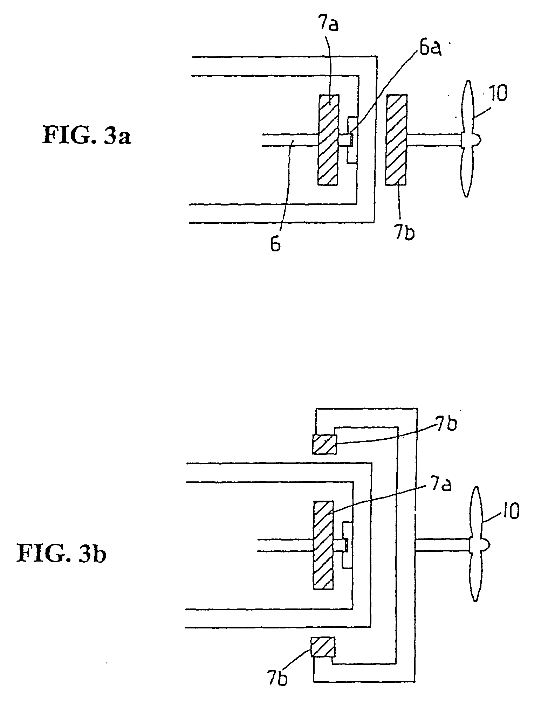

Here, when the rotational force of the first magnet 7a is to be transmitted to the second magnet 7b as shown in Fig. 3(a), the two magnets 7a and 7b attract each other causing an increase in the frictional resistance between the horizontal output shaft 6 of the first magnet 7a and the bearing 6a, thereby producing some loss of energy in the rotational force due to a thrust phenomenon. As shown in Fig. 3(b), therefore, the second magnet 7b is arranged to surround the horizontal output shaft 6 of the first magnet 7a, whereby the energy loss is prevented and the electric power of the solar panel 1 can be efficiently utilized.

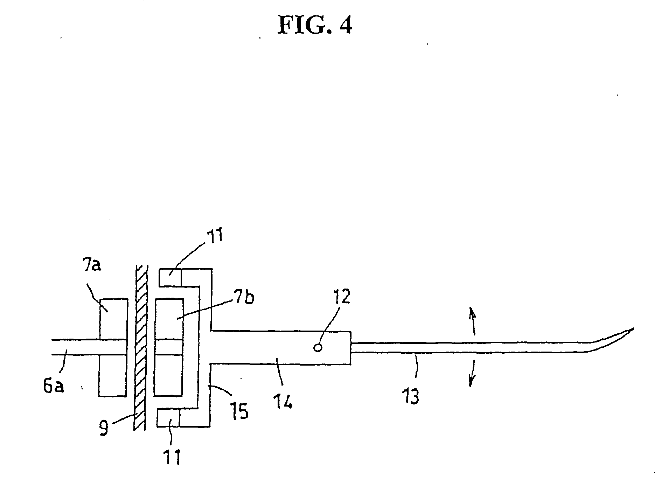

Referring to Fig. 4, two small magnets 11 are attached to a U-shaped member 15 with either one of their N-pole or S-pole being faced inward on the right and left sides of the second magnet 7b, the U-shaped member 15 extends to sandwich the second magnet 7b at the front end of the horizontal rod 14. The horizontal rod 14 is supported to horizontally and reciprocally move about a support shaft 12 located at the rear portion of the propeller 10. A caudal fin 13 is vertically attached to the rear end of the horizontal rod 14. Therefore, the right and left small magnets 11 alternatingly receive an attractive force and a repulsive force due to a change in the magnetic field produced by the rotation of the magnet 7b, and the caudal fin 13 accordingly oscillates to the right and left via the horizontal rod 14. Thus, the underwater toy proceeds while finely oscillating right and left to simulate a fish movement.

Similarly, the vertical output shaft 6b and a small pulley 16 are coupled together via a first magnet 7a and a second magnet 7b. The rotation of the small pulley 16 is reduced and is transmitted to a large pulley 18 via a rubber belt 17. A weight 20 is attached to the large pulley 18 via an arm 19 cantilevered to the lower surface thereof from the central direction. As the weight 20 slowly turns together with the large pulley 18, the entire center of gravity of the toy is displaced, whereby the fish-type underwater toy greatly shakes its body back and forth, and right and left, and, as a result, proceeds to describe a locus of motion which is twisting to a large extent. This expresses a more complex and apparent living behavior in addition to fine right-and-left oscillation. When the underwater toy is used in the water tank, the weight 20 can also be utilized as means for converting the direction of the toy when it comes to a side surface or corner of the water tank or container.

A space is formed between the solar panel 1 on the upper surface and the toy body 3, and a float 21 of a foamed styrol or the like is accommodated therein. The float 21 is adjusted in its volume so that the particular fish-type underwater toy is weighted in the water to slowly sink the float 21 and is positioned just over the center of gravity so that a horizontal attitude can be maintained. Reference numeral 22 denotes a wire that can touch the bottom of the tank, and the main body 3 swings in the water with the end thereof as a fulcrum emphasizing a feeling of floating.

The underwater toy must have a specific gravity which is nearly 1. To accomplish this, the water temperature may also be adjusted, an air lift may be utilized, an adjusting weight may be utilized, a suitable additive may be added to the water, or any other liquid may be mixed thereto.

A head of the fish is simply a decorative feature. However, the junction portion to the main toy body 3 is a support which can freely rotate about a vertical shaft 23, and a mechanism for opening and closing the mouth is a horizontal support that can freely rotate. Therefore, they move following fine oscillations of the main toy body 3 to express a simulated living operation such as moving the neck and opening/closing the mouth while moving in a forward or reverse direction. Pectoral fins and dorsal fin are made of a thin rubber film which swings following the oscillation of the main body 3 or a change in the water stream in the container.

As described above, the second magnet 7b and the drive shaft outside the container 8 are rotated by the motor 4, by the output shaft operably coupled thereto and by the first magnet 7a secured to the output shaft that are sealed in the container 8, making it possible to carry out the operation in the water without being affected by the water.

The power source for the motor 4 need not necessarily be the solar panel but may be power cells. However, the cells must also be made waterproof or must be contained in the same container 8 as that of the motor 4.

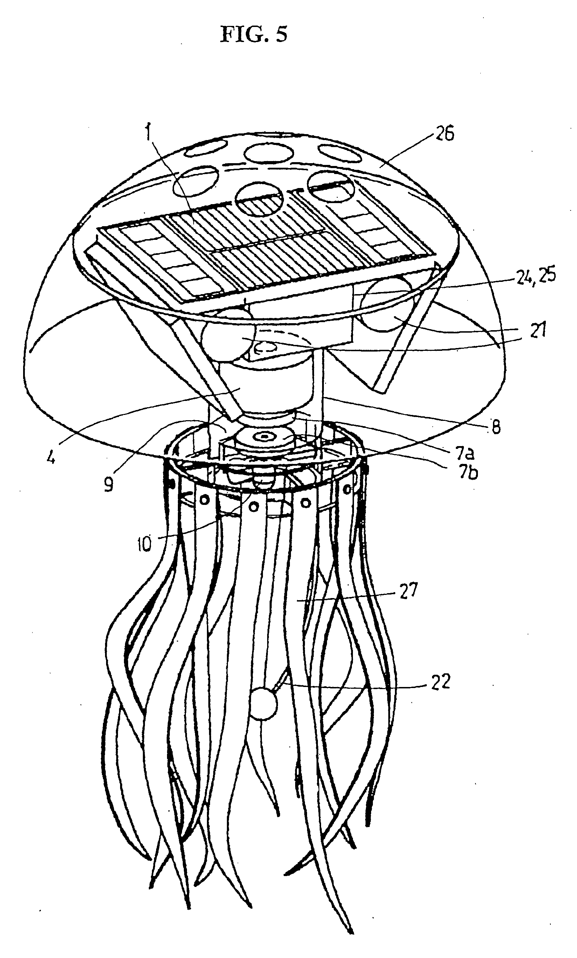

Next, Fig. 5 illustrates a case when the underwater toy is modeled after a jellyfish. In Fig. 1, reference numeral 1 denotes a solar panel which is a source of drive, and can be constituted in the same manner as the example described above, and includes those with their light-receiving surfaces facing upward relative to the main toy body 3 and those with their light-receiving surfaces facing downward in an inclined manner so as to receive light from the upper side and light from the lower side reflected by mirrors (not shown) provided on the bottom of the water tank.

The five solar cells 1 are made waterproof by using transparent plastic plates which are vacuum-press-adhered from the front and back surfaces and include those horizontally attached to the main body with their light-receiving surfaces facing upward and those attached to both side surfaces of the main body with their light-receiving surfaces facing downward in an inclined manner. The solar cells are so arranged as to receive light from the upper side and light from the lower side reflected by the mirrors placed on the bottom of the water tank. The solar cells horizontally attached include large cells and small cells in combination, the large ones for powering and the small ones for the charging circuit.

A charging circuit 24 and an intermittent operation circuit 25 are arranged on the motor 4 that is arranged at the center of the main toy body 3, and are so wired as to operate intermittently while light is being received as well as when no light is falling for a short period of time. To the lower end of the output shaft 6 of the motor 4 is attached a first doughnut-type magnet 7a having an N-pole and an S-pole on the same plane. They are contained and sealed in the container 8 which as a whole is made waterproof.

A second doughnut-type magnet 7b is disposed facing the first magnet 7a via a separator wall 9 which is a side wall of the container 8, and a propeller 10 (drive means) secured thereto is so supported as to freely rotate.

When any surface of the solar panel 1 receives light from the sun or from other illumination sources, the above constitution generates electric power by which the motor 4 rotates thereby to rotate the first magnet 7a causing a change in the magnetic field. Therefore, the second magnet 7b rotates synchronizing therewith. The motor 4 turns and stops repetitively due to the intermittent operation circuit 25, which can include a timer circuit to turn the motor 4 on and off, and the jellyfish-type underwater toy repetitively operates to ascend, stop and sink.

A space is formed between the solar panel 1 on the upper surface and the main toy body 3, and a float 21 of a foamed styrol or the like is accommodated therein. The float 21 is adjusted for its volume so that the jellyfish-type underwater toy slowly sinks, and is positioned just over the center of gravity so that a horizontal attitude can be maintained. Further, an extension wire 22 that touches the bottom is protruding downward from the lower part of the main toy body 3. When the power unit is halted and the main body sinks, the end of the wire 22 touches the bottom of the water tank so that the main toy body 3 itself does not touch the bottom. The main body 3 swings in the water with the end of the wire 11 touching the bottom as a fulcrum member for emphasizing the feeling of floating.

A transparent dome 26 constituting the head is modeled after the shape of a real jellyfish and is made of a transparent plastic material so it will not interrupt light from the upper side and has a plurality of water-drain holes perforated in the vertex portion thereof. The lower part of the transparent dome 26 is forming a fine radial skeleton, and a soft doughnut-like thin film 26a is covered thereon from the upper side so as to be deformed with a small force. A plurality of arms or tentacles 27 are made of a thin rubber film so as to swing depending upon a change in the water stream.

This embodiment has functions of propulsion in both the horizontal and vertical directions. To obtain a three-dimensionally moving function involving moving up and down, and turning to the right and left, a very weak circulatory water flow or ascending or descending water stream may be established in the water tank by a pump as an environment in the water. Even when dead angles or zones of the source of light are expected, the optical underwater toy successively moves inside and outside the areas where it will be irradiated with light, and is therefore necessarily maintained and supplied with electric power.

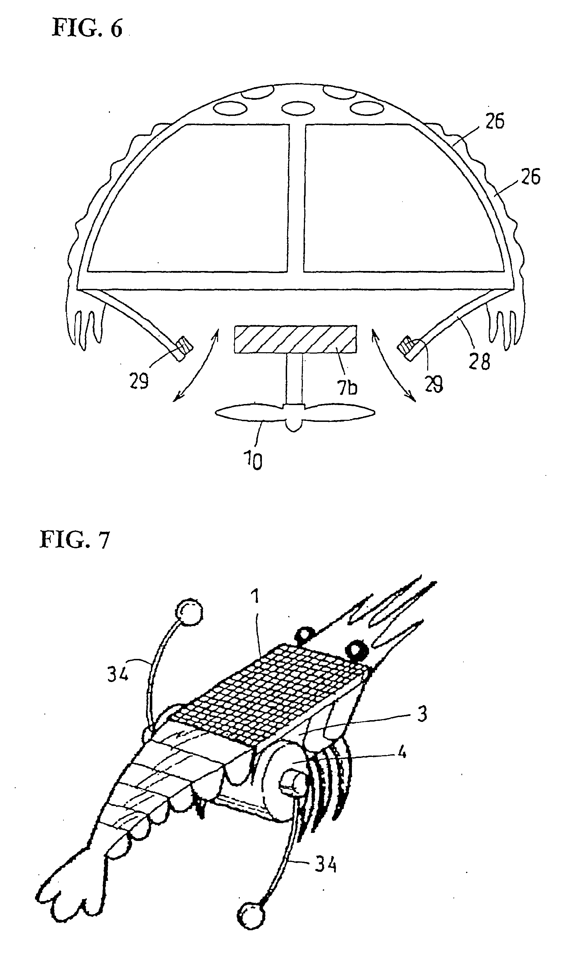

Referring to Fig. 6, a skirt 28 is continuously fitted to the lower radial skeleton of the transparent dome 26, a plurality of small magnets 29 are attached to the inner peripheral edge portions of the skirt 28 and are arranged near the second magnet 7b. Then, the small magnets 29 altematingly receive an attractive force and a repulsive force due to a change in the magnetic field caused by the rotation of the magnet 7b, and the skirt 28 oscillates up and down. Then, the skeleton constituting the dome and the thin film pulsate to impart a more real feeling to the main toy body 3.

In the above-mentioned example, too, the second magnet 7b and the drive means 10 on the outside of the container 8 are rotated by the motor 4, by the output shaft 6 operably coupled thereto and by the first magnet 7a secured to the output shaft 6 that are sealed in the container 8. Therefore, the operation is realized in the water without being affected by the water.

Next, Fig. 7 illustrates a case of when the underwater toy is modeled after a shrimp. In Fig. 7, the power source is a solar panel 1 having the same structure as the embodiment described above, and is disposed with its light-receiving surface facing upward relative to the main toy body 3 so as to receive light from the upper side. The underwater toy is so adjusted as to sink down to the bottom of the water.

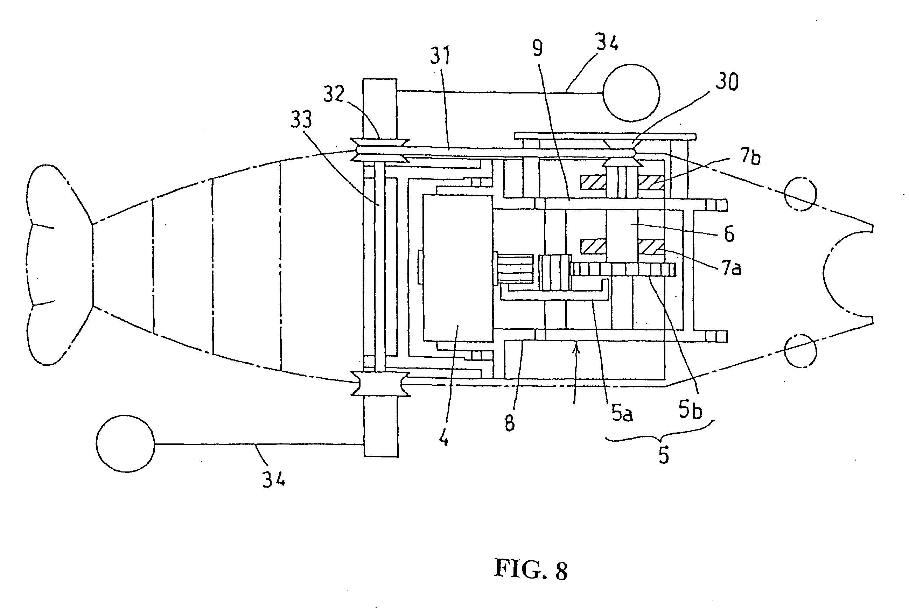

As shown in detail in Fig. 8, a motor 4 and reduction gears (crown gear 5a and spur gear 5b) are arranged at the center of the main toy body 3, and a first doughnut-type magnet 7a having an N-pole and an S-pole on the same plane is attached to the output shaft 6. They are contained and sealed in the container 8 which as a whole is made waterproof.

A second doughnut-type magnet 7b is opposed to the above first magnet 7a via a separator wall 9 which is a side wall of the container 8, and a small pulley 30 is secured thereto. The rotation of the small pulley 30 is reduced and is transmitted to a large pulley 32 via a rubber belt 31. The large pulley 32 is fastened to a drive shaft 33 to which both ends are attached two resilient propulsion wires 34 at positions deviated by 180° from each other. Transparent balls 35 are attached to the ends of the wires 34.

When any surface of the solar panel 1 receives light from the sun or from an illumination, the above constitution generates electric power by which the motor 4 rotates thereby to simultaneously rotate the output shaft 6 and the first magnet 7a. The rotation of the first magnet 7a causes a change in the magnetic field and, hence, the second magnet 7b rotates synchronizing therewith. The rotational force is transmitted from the small pulley to the large pulley 32, and the drive shaft means 10 rotates. Then, the two wires 34 alternate so as to operate to kick the bottom of the tank or the water, and the shrimp-type underwater toy operates to appear to jump intermittently.

Simulated legs are made of a thin rubber film to swing following the oscillation of the main body 3 and any change in the water stream.

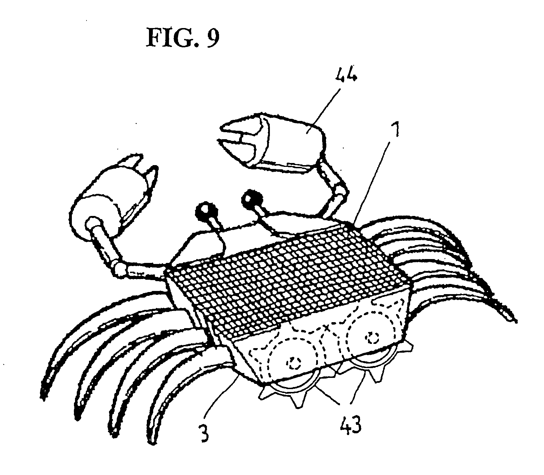

Next, Fig. 9 illustrates a case when the underwater toy is modeled after a crab. In Fig. 9, the power source is a solar panel 1 having the same structure as the one described above, and is disposed with its light-receiving surface facing upward relative to the main toy body 3 so as to receive light from the upper side. A circuit casing or the like is provided under the solar panel. The underwater toy is also adjusted as to sink down to the bottom of the water.

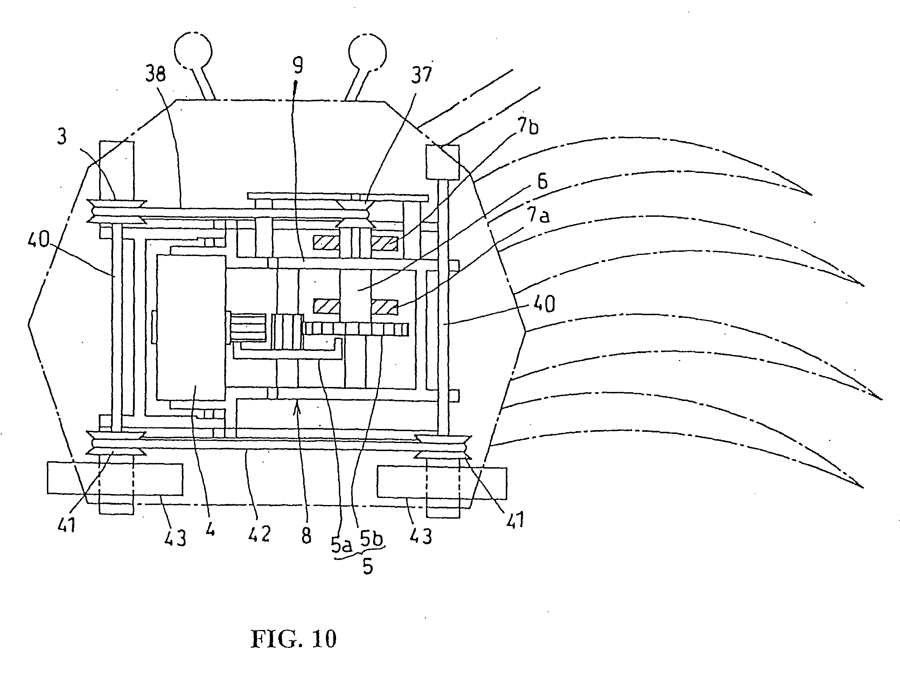

As shown in detail in Fig. 10, a motor 4 and reduction gears (crown gear 5a and spur gear 5b) are arranged at the center of the main toy body 3, and a first doughnut-type magnet 7a having an N-pole and an S-pole on the same plane is attached to the output shaft 6. They are contained and sealed in the container 8 which as a whole is made waterproof.

A second doughnut-type magnet 7b is opposed to the above first magnet 7a via a separator wall 9 which is a side wall of the container 8, and a small pulley 37 is secured thereto. The rotation of the small pulley 37 is reduced and is transmitted to a large pulley 39 via a rubber belt 38. The large pulley 39 is fastened to an end of one of drive shafts 40 provided at the right and left of the main toy body 3. Pulleys 41 are provided at the other ends of the two drive shafts 40, and a rubber belt 42 is stretched between the two pulleys 41. Rotary means such as prongs 43 having protuberances on the circumferences thereof are attached to the above other ends of the two drive shafts 40.

Reference numeral 44 denotes a float for floating the side (front side) opposite to the rotary means 43 of the main toy body 3.

When any surface of the solar panel 1 receives light from the sun or from an illumination, the above constitution generates electric power by which the motor 4 rotates thereby to simultaneously rotate the output shaft 6 and the first magnet 7a. The rotation of the first magnet 7a causes a change in the magnetic field and, hence, the second magnet 7b rotates synchronizing therewith. The rotational force is transmitted from the small pulley 37 to the large pulley 39, and the drive shafts 40 rotate. As the drive shafts 40 rotate, the rotation prongs 43 rotate, and the crab-type underwater toy moves to proceed intermittently. Here, if the motor 4 is so set to rotate forward and reverse at regular intervals, the underwater toy reciprocally moves toward the right and left.

The legs are made of thin rubber films so as to swing following a change in the water stream.

The above underwater toys are not necessarily limited to those of the above-mentioned types of fish, crab, shrimp and jellyfish. The underwater toy may, for example, be a submarine.

The above-mentioned examples operate by their own propulsion. it is, however, also allowable to generate a water stream to operate them in combination with the water stream. It should also be noted that each of these underwater toys could be remotely controlled with wireless receivers and remote controllers. Additionally, charging circuits and intermittent power circuits can also be provided in each underwater toy if desired.

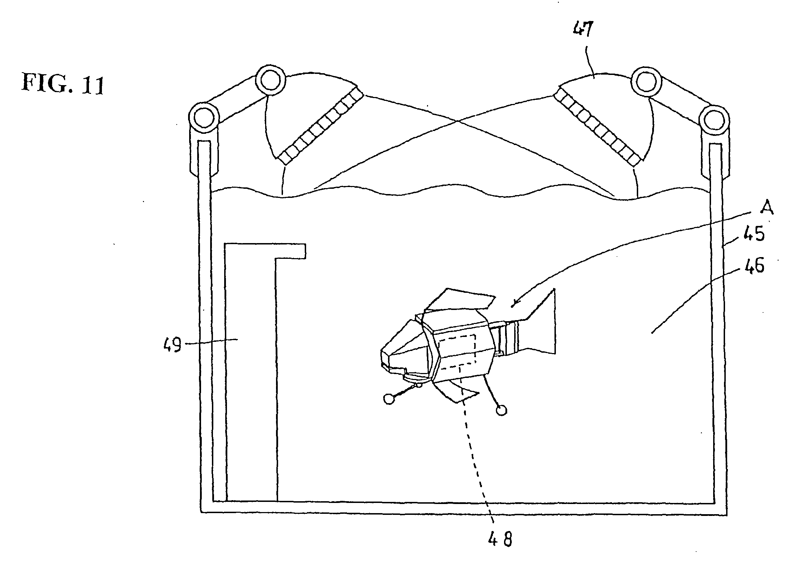

Next, Fig. 11 is a view schematically illustrating a system for accommodating the operation of the underwater toys. The aquarium system comprises a transparent container 45, a liquid 46 filled in the container 45, an illumination means for illuminating the interior of the container 45, and an underwater toy A equipped with a drive mechanism 48 that operates to swim in the container 45 as it is illuminated by the illumination means such as lamps 47. The container 45 may be a water tank.

The liquid 46 may be water, or water to which another liquid is added, or even liquid other than water. The liquids may be combined together to adjust the specific gravity so that the underwater toy A does not float or sink in the liquid 46. A heater unit (not shown) can be used with temperature control to maintain a set temperature for the liquid to further adjust the buoyancy of the liquid.

The illuminating means 47 may be an ordinary light for illumination by which the solar panel of the underwater toy A generates electricity.

Though the underwater toy A is the one illustrated in Fig. 1, it may be equipped with any mechanism constituted by the operation mechanism 48 that is operated by the electric power generated by the solar panel, i.e., the one constituted by motor, reduction gears, propeller, rotary means, etc. as shown in Figs. 5, 7, 9, 17 and 18.

By providing a water stream generator 49 in the container 45 such as a pump and nozzle, the underwater toy A can be further controlled so as to stabilize its attitude, to float or to sink relying upon a balance between the propulsive force of the underwater toy A and the water stream. The water stream is not readily visible to the observer, and accordingly, supplements the driving force of the solar cells.

According to the above-mentioned aquarium system, there is provided a new form of appreciation such as enjoying the underwater toys that are put into a water tank indoors.

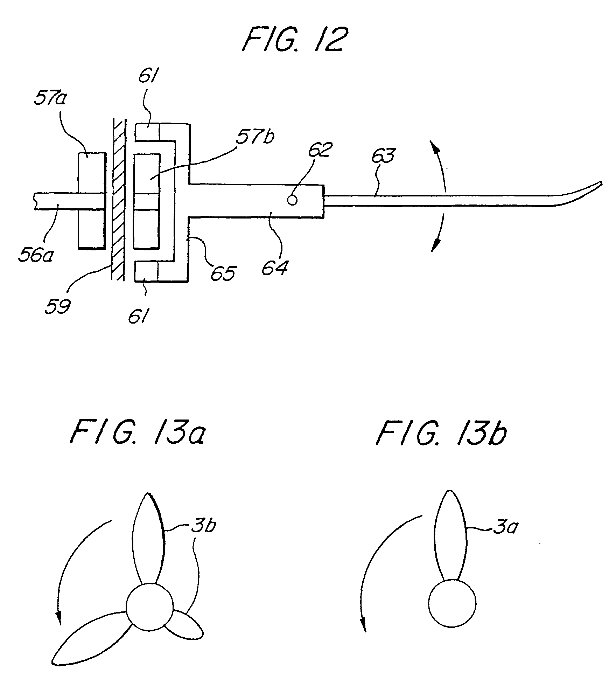

Referring to Fig. 12, two small magnets 61 are attached to a U-shaped member 65 with either one of their N-pole or S-pole being faced inward on the right and left sides of the second magnet 57b, the U-shaped member 65 so extending as to sandwich the second magnet 57b at the front end of the horizontal rod 64. The horizontal rod 64 is supported to horizontally and reciprocally move about a support shaft 62 located at the rear portion of the propeller 10. A caudal fin 62 is vertically attached to the rear end of the horizontal rod 64. Therefore, the right and left small magnets 61 alternatingly receive an attractive force and a repulsive force due to a change in the magnetic field produced by the rotation of the magnet 57b, and the caudal fin 63 oscillates to the right and left via the horizontal rod 64. Thus, the underwater toy proceeds while finely oscillating right and left to simulate a swimming movement.

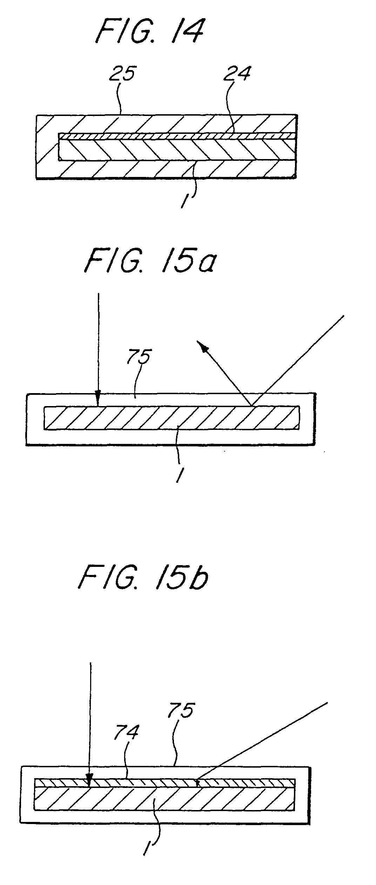

Such an oscillating mode can be further realized by using an unbalanced propeller 3a or 3b as shown in Figs. 13(a) and 13(b).

As described above, the fish-type underwater toy apparently swims in the water by utilizing, as the power source, the electric power generated by the solar panel 1. The solar panel 1 generates electric power as it is irradiated with light from a source of light for illumination or from the sun, and is protected against the water by a protection layer of a transparent protecting material as shown in Fig. 14. Further, a transparent light reflection prevention layer is formed on the surface on where light is incident and the layer is made waterproof.

Upon forming the light reflection prevention layer 74 between the solar panel 1 and the protection layer 75 as described above, the incident light is further refracted by the light reflection prevention layer 74 as shown in Fig. 15(b) and more light is converted into electricity.

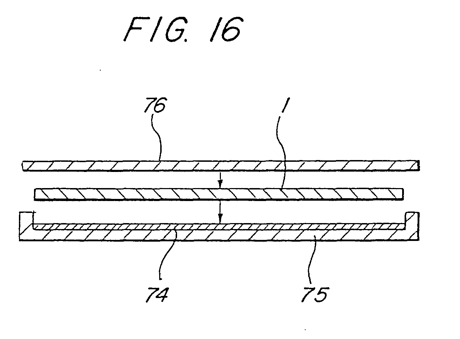

Usually, the transparent light reflection prevention layer 74 is formed on the inner bottom of a transparent plastic protection container 75 as shown in Fig. 16, the solar panel 1 is intimately adhered thereon and, then, a closure 76 of the protection container 75 is placed thereon from the upper side and is press-adhered in a vacuum. However, the solar panel 1 may be intimately sealed to be waterproof by any other method.

The solar panel 1 is so arranged that light falls from the side of the light reflection prevention layer 74. The light reflection prevention layer 74 may be made of a material that prevents the reflection of light, such as highly transparent silicone, transparent resin or epoxy resin.

With the light reflection prevention layer 74 being formed on the surface of the solar panel 1 on where the light falls, the light is prevented from reflecting even when the light of an illumination apparatus or of the sun is falling from an inclined direction, and incident light is efficiently converted into electricity. It is therefore made possible to obtain a drive source sufficient for operating the underwater toy.

According to the invention, the reflection prevention layer is formed on the incident surface of the solar panel. Therefore, the light is prevented from reflecting even when the light of the illumination apparatus or of the sun is falling from an inclined direction, and the incident light is efficiently converted into electricity. It is therefore made possible to obtain a power source sufficient for operating the underwater drive unit.

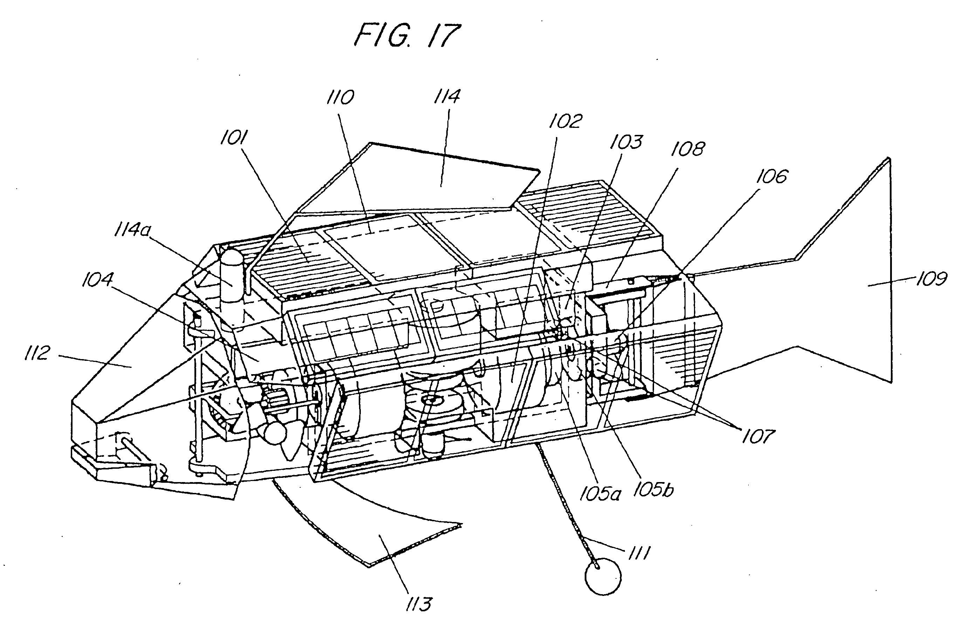

An embodiment of the invention will be described hereinbelow. Fig. 17 is a perspective view of another fish-type toy. In Fig. 17, reference numeral 101 denotes a plurality of solar cells, 102 denotes a plurality of motors, 103 denotes a charging circuit, 104 denotes a remote control receiver circuit, 105a and 105b denote doughnut-type magnets, 106 denotes a plurality of propellers, 109 denotes a caudal fin, 110 denotes a float, and reference numeral 111 denotes a wire that touches the bottom.

Ten solar cells 101 are made waterproof by using transparent plastic plates that are vacuum-press-adhered from the front and back surfaces include those which are horizontally attached to the main body with their light-receiving surfaces facing upward, those which are attached to both side surfaces of the main body with their light-receiving surfaces facing downward in an inclined manner, and those of a small size which are attached to both side surfaces of the main body with their light-receiving surfaces facing upward in an inclined manner. The solar calls are thus arranged to receive light from an upper direction and light from a lower side reflected by mirrors placed on the bottom of the water tank. The large solar cells are for powering and the small solar cells are for the charging circuit.

Three motors 102 are arranged in order from the rear part of the main body, being laterally arranged facing backward, being vertically arranged facing downward, and being laterally arranged facing forward, respectively. A charging circuit 103 connected to small solar cells is arranged in the upper part of the motor at the rear portion, and a remote control receiver circuit 104 is arranged in the upper part of the motor at the front portion.

The solar cells 101 are connected to the remote control receiver circuit 104 through the charging circuit 103, and are further wired to control the three motors 102. They are made waterproof inclusive of the wiring by a continuous container to thereby constitute a main body skeleton.

The remote control receiver circuit 104 has a receiving portion 104a that protrudes beyond the main body. When any surface of the solar cells 101 is receiving light or the charging circuit 103 is supplied with electric power, the remote operation of forward turn, reverse turn or stop can be executed for the three motors 102 according to a received signal.

The doughnut-type magnet 105a having an N-pole and an S-pole on the same plane is secured to an end of the output shaft of each of the motors 102. The doughnut type magnet 105b is similarly placed facing the magnet 105a via a separator wall, so that the propeller 106 fastened thereto is allowed to freely rotate. The propeller 106 turns via the magnet 105b that synchronizes with a change in the magnetic field by the turn of the magnet 105a. Depending upon the direction of the propeller 106, the main body moves forward, backward, up, down, or turns.

On the right and left sides of the magnet 105b associated with the forward and backward motion, two small magnets 107 are secured to a U-shaped member with their single electrode of either N or S only being faced inward, the U-shaped member extending so as to sandwich the magnet 105b at the front ends of the horizontal rod 108. The horizontal rod 108 is freely supported so as to horizontally and reciprocally move about a support shaft located at a rear part of the propeller 106. A caudal fin 109 is vertically attached to the rear end of the horizontal rod.

Due to a change in the magnetic field by the turn of the magnet 105b, the right and left small magnets 107 alternatingly receive an attractive force and a repulsive force, and the caudal fin 109 oscillates right and left via the horizontal rod 108. Therefore, the main body moves forward or backward while finely oscillating right and left.

A space is formed between the solar cells 101 on the upper surface and the main body, and a float 110 of a foamed styrol or the like is accommodated therein. The float 110 is adjusted for its volume so that the fish-type toy slowly sinks, and is positioned just over the center of gravity so that a horizontal attitude can be maintained. Further, a wire 111 that touches the bottom is protruding downward from the lower part of the main body. When the main body no longer moves and sinks, the end of the wire touches the bottom of the water tank so that the main body itself does not touch the bottom. The main body swings in the water with the end of the wire 111 touching the bottom as a fulcrum emphasizing the feeling of floating.

A head 112 of the fish is simply a modeling. However, the junction portion to the main body is a vertical support which can freely rotate, and a mechanism for opening and closing the mouth is a horizontal support that can freely rotate. Therefore, they move following fine oscillation of the main body expressing living operation such as moving the neck and opening/closing the mouth while moving forward or reverse. Pectoral fins 113 and dorsal fin 114 are made of a thin rubber film which swing following the oscillation of the main body or a change in the water stream.

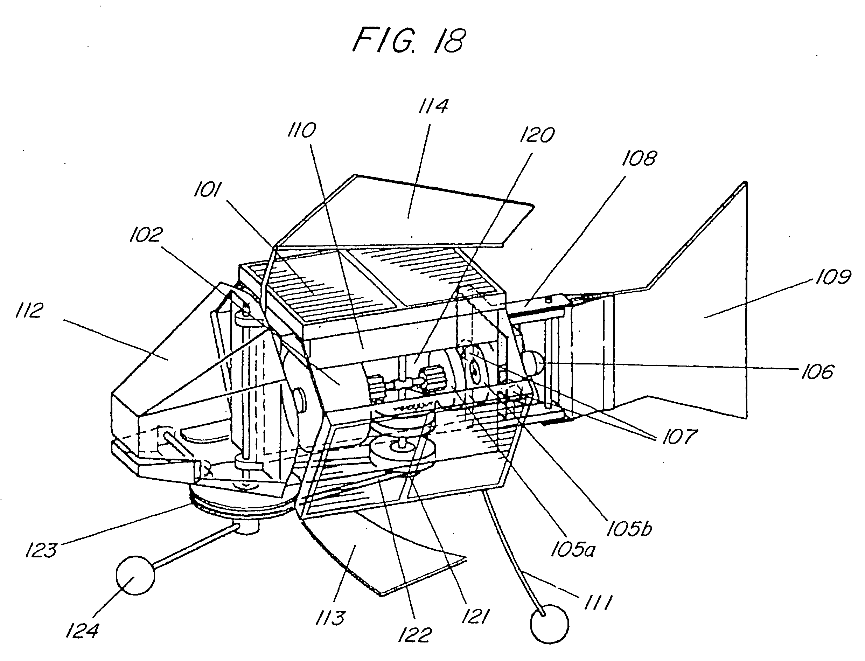

Another embodiment of the invention will now be described that employs only a set of solar cells and a propulsion motor in combination, omitting the functions of electric charge and remote operation. Fig. 18 is a perspective view of this fish-type toy. In Fig. 18, reference numeral 101 denotes solar cells, 102 denotes a motor, 105a and 105b denote doughnut-type magnets, 106 denotes a propeller, 109 denotes a caudal fin, 110 denotes a float, 111 denotes a wire that touches the bottom, 120 denotes a reduction gear box, 121 denotes a small pulley, 123 denotes a large pulley, and reference numeral 124 denotes a weight.

The three solar cells 101 are made waterproof by using transparent plastic plates which are vacuum-press-adhered from the front and back surfaces include one that is horizontally attached to the main body with its light-receiving surface facing upward, and those attached to both side surfaces of the main body with their light-receiving surfaces facing downward in an inclined manner. The solar cells 101 are so arranged as to receive light from the upper side and light from the lower side reflected by the mirrors placed on the bottom of the water tank.

The motor 102 is arranged at the center of the main body, the reduction gear box 120 is arranged at a rear portion thereof, doughnut-type magnets 105a having N-poles and S-poles on the same plane are attached to the ends of the horizontal output shaft and to the vertical output shaft thereof, and are made waterproof by a continuous container to thereby constitute a main body skeleton. When any surface of the solar cells 101 is receiving light, the motor rotates and the two output shafts rotate simultaneously.

The doughnut type magnet 105b is similarly placed facing the magnet 105a via a separator wall, so that the propeller 106 fastened thereto and the small pulley 121 are allowed to freely rotate. The propeller 106 and the small pulley 121 turn simultaneously via the magnet 105b that synchronizes with a change in the magnetic field by the turn of the magnet 105a. Depending upon the turn of the propeller 106, the main body moves forward.

On the right and left sides of the magnet 105b, two small magnets 107 are secured to a U-shaped member with their single electrode of either N or S only being faced inward, the U-shaped member extending so as to sandwich the magnet 105b at the front ends of the horizontal rod 108. The horizontal rod 108 is freely supported so as to horizontally and reciprocally move about a support shaft located at a rear part of the propeller 106. A caudal fin 109 is vertically attached to the rear end of the horizontal rod.

Due to a change in the magnetic field by the turn of the magnet 105b, the right and left small magnets 107 alternatingly receive an attractive force and a repulsive force, and the caudal fin 109 oscillates right and left via the horizontal rod 108. Therefore, the main body moves forward while finely oscillating right and left.

The rotation of the small pulley 121 is reduced and transmitted to the large pulley 123 via a rubber belt 122. The large pulley 123 has an arm cantilevered to the lower surface thereof from the central direction, and the weight 124 is attached to an end of the arm. As the weight 124 slowly turns together with the large pulley 123, the entire center of gravity successively moves, whereby the fish-type toy greatly shakes its body back and forth, and right and left, and, as a result, proceeds describing a locus which is twisting to a large extent. This expresses a more complex and living behavior in addition to fine right-and-left oscillation.

A space is formed between the solar cells 101 on the upper surface and the main body, and a float 110 of a foamed styrol or the like is accommodated therein. The float 110 is adjusted for its volume so that the fish-type toy slowly sinks, and is positioned just over the center of gravity so that a horizontal attitude can be maintained. Further, a wire 111 that touches the bottom is protruding downward from the lower part of the main body. When the main body no longer moves and sinks, the end of the wire touches the bottom of the water tank so that the main body itself does not touch the bottom. The main body swings in the water with the end of the wire 111 touching the bottom as a fulcrum emphasizing the feeling of floating.

A head 112 of the fish is simply a modeling. However, the junction portion to the main body is a vertical support which can freely rotate, and a mechanism for opening and closing the mouth is a horizontal support that can freely rotate. Therefore, they move following fine oscillation of the main body expressing living operation such as moving the neck and opening/closing the mouth while moving forward or reverse. Pectoral fins 113 and dorsal fin 114 are made of a thin rubber film which swing following the oscillation of the main body or a change in the water stream.

In each of the above embodiments, the different positions and structures of the present invention are described separately in each of the embodiments. However, it is the full intention of the inventor of the present invention that the separate aspects of each embodiment described herein may be combined with the other embodiments described herein. Those skilled in the art will appreciate that adaptations and modifications of the just-described preferred embodiment can be configured without departing from the scope and spirit of the invention. Therefore, it is to be understood that, within the scope of the appended claims, the invention may be practiced other than as specifically described herein.

## Claims

1. A display system for presenting aquatic devices comprising:
a container for holding a liquid;
a unit for causing the liquid to circulate in the container; and
an aquatic toy apparatus that is sized to fit within the container having a motor, a generator of power for driving the motor and a propulsion member operatively connected to the motor to cause movement of the toy apparatus, the aquatic toy apparatus is weight balanced to be approximately neutral weight when immersed in the liquid whereas the combination of the circulating liquid and the motor causes the aquatic toy to move within the container.

2. The invention of Claim 1 wherein the aquatic toy is configured to simulate one of a group consisting of a robotic fish, a robotic shrimp, a robotic crab and a robotic jellyfish.

3. The invention of Claim 1 wherein the generation of power is a solar panel that converts light into electrical energy to drive the motor.

4. The invention of Claim 3 wherein the solar panel has an anti-reflective layer above it.

5. The invention of Claim 3 wherein the motor is sealed within a water proof housing.

6. The invention of Claim 5 wherein a magnetic transmission assembly transmits the movement of the motor through the waterproof housing to the propulsion member.

7. The invention of Claim 6 wherein the propulsion member is a propeller.

8. The invention of Claim 7 wherein the propeller is unbalanced to cause erratic movement of the toy apparatus.

9. The invention of Claim 6 wherein the propulsion member is a pair of members with radial prongs.

10. The invention of Claim 6 wherein the propulsion member is a pair of resilient elongated members that rotate.

11. The invention of Claim 3 further including a light source for illuminating the solar panel.

12. The invention of Claim 3 wherein the aquatic toy is configured with an upper dome member and a lower series of simulated tentacles to provide a simulated jellyfish.

13. The invention of Claim 12 wherein the jellyfish has a propulsion member beneath the upper dome member for providing an ascending force.

14. The invention of Claim 12 wherein a plurality of small magnets are connected to a flexible skirt member and a rotating magnet is operatively connected to the motor to cause the skirt member to oscillate.

15. The invention of Claim 13 wherein a lower flexible extending member provides a fulcrum support for contacting a bottom surface of the container.

16. The invention of Claim 13 further including a charging circuit to store power for the motor.

17. The invention of Claim 13 further including an intermittent operation circuit to periodically activate the motor.

18. The invention of Claim 3 wherein the aquatic toy is configured to have a fish appearance.

19. The invention of Claim 18 further including a rotating weight member operatively connected to the motor to vary the center of gravity and to oscillate the toy apparatus.

20. The invention of Claim 18 further including a simulated tail fin and a magnetic force transmission apparatus to move the tail fin.

21. The invention of Claim 20 further including a movable simulated mouth.

22. The invention of Claim 19 further including a fulcrum member extending downward to support the aquatic toy above a bottom surface of the container.

23. The invention of Claim 3 wherein the aquatic toy is configured to simulate a crab.

24. The invention of Claim 23 wherein the propulsion member includes a pair of wheel members with radial prongs to move the aquatic toy in a sideways direction.

25. The invention of Claim 24 wherein the propulsion member is intermittently driven by an intermittent circuit connected to the motor.

26. The invention of Claim 3 wherein the aquatic toy is configured to simulate a shrimp.

27. The invention of Claim 26 wherein the shrimp has a pair of propulsion members, one on each side that are 180° out of phase to cause a jumping movement when driven by the motor.

28. The invention of Claim 27 wherein the motor has an output shaft mounted within a simulated shrimp housing; a first magnet member operatively movable with the output shaft within the housing; and a second magnet member movably mounted on an exterior of the housing and magnetically coupled with the first magnet member to move in conjunction with the first magnet member whereby an exterior movable member may be operatively coupled with the second magnet member for movement.

29. An underwater solar panel for providing power comprising:
a solar panel for generating electricity by conversion of incident light;
an anti-reflection layer positioned across the solar panel to reduce the reflection of incident light; and
a waterproof housing encompassing the solar panel and anti-reflection layer.

30. The invention of Claim 29 wherein the anti-reflection layer is selected from a group consisting of transparent silicone plastic resin and an epoxy resin.

31. In an underwater toy that has a housing with an exterior movable member, the improvement of:
a motor having an output shaft mounted within the housing;
a first magnet member operatively movable with the output shaft within the housing; and
a second magnet member movably mounted on an exterior of the housing and magnetically coupled with the first magnet member to move in conjunction with the first magnet member whereby an exterior movable member may be operatively coupled with the second magnet member for movement.

32. An underwater toy comprising:
a waterproof housing;
a sealed solar panel member operatively mounted for receiving ambient light;
an electric motor mounted within the housing, and driven by the energy from the solar panel member;
a propulsion member operatively mounted to an exterior of the housing; and
a magnetic transmission assembly operatively connected to the electric motor with one magnetic member mounted internally within the housing and another magnetic member mounted external to the housing to transmit an output of the electric motor to the propulsion member.

33. The invention of Claim 32 further including a wireless receiver for receiving control signals to activate the motor and a remote controller for transmitting control signals to the wireless receiver.
